# EUROPEAN PATENT SPECIFICATION

(11) **EP 1 946 913 B1**
(45) Date of publication and mention of the grant of the patent: **16.03.2011**
(21) Application number: 07100884.1
(22) Date of filing: 22.01.2007
(51) Int. Cl.: B29C 70/34, B29D 99/00

(54) **Method and apparatus for manufacturing a wing spar profile element**
Verfahren und Vorrichtung zur Herstellung eines Tragflächenholmprofilelements
Procédé et appareil de fabrication d'un élément de longeron d'aile

(43) Date of publication of application: 23.07.2008
(73) Proprietor: SAAB AB, 581 88 Linköping (SE)
(72) Inventor: KROGAGER, Max, 582 42, LINKÖPING (SE); VAARA, Jan, 582 75, LINKÖPING (SE); PETERSSON, Mikael, 585 90, LINKÖPING (SE); WEIDMANN, Björn, 590 31, BORENSBERG (SE)
(74) Representative: Börlin, Maria

(56) References cited:
- EP-A- 1 731 291
- US-A- 4 475 976
- US-A- 6 114 012
- US-A1- 2005 183 818

## Description

### TECHNICAL FIELD OF THE INVENTION

The present invention relates to a method according to claim 1 for manufacturing of a wing spar having a profile, such as C-profile, Ω-profile etc, the wing spar being made of a reinforced resin composite, such as thermo setting plastic, epoxi resins, thermoplastics, polyester resins, fibreglass reinforced plastics etc. The present invention also relates to an apparatus for manufacture of the wing spar according to claim 7.

### BACKGROUND OF THE INVENTION

It is complex to manufacture a beam made of reinforced resin composite, wherein the fibres must follow the curvature of the beam. Especially when manufacturing C-beams, a common method is to, as a first step, apply "prepreg" material (layers of fibre material previously impregnated with resin, such as thermosetting resin) onto a web forming tool surface and thereafter forming the flanges about flange forming surfaces of the tool. This often involves extra work efforts and the blank material has a tendency to be crinkled.

It is desirable to make use of an ATL-apparatus (automatic tape laying) for initially applying plies of prepreg material onto each other providing a rectangular blank, which rectangular blank can be formed into a profile element, such as a C-beam, L-beam etc, without the need of removing material from the blank after curing.

For example, a wing of an aircraft comprises one or more wing spars embodied within the wing shell. Commonly, an aircraft, such as airliner, comprises two or four power plants located below and ahead of the wing, each power plant is connected to the wing via an engine support. For solving the problem of keeping the landing gear as short as possible, creating a sufficient ground clearance between the power plant and the ground during taxiing and take-off, the prior art wing spars are provided with cavities, each embodying the engine support of the respective power plant such that the power plant can be arranged as near as possibly to the wing chord. These cavities are achieved by milling of composite material of the wing spar's lower flange. It is also desirable to have the power plants located as near as possible the line of the wing chord due to the maj or drag forces created by the power plants during take-off.

As such a mill of results in a weakened structure of the wing spar, additional material or reinforcing material has to be added to the wing spar within the area of the cavity. This involves additional weight to the air craft and further costs regarding the manufacture of the wing spar.

When manufacture of such a wing spar of composite material, the profile element is formed by application of a blank of prepreg material over a male tool portion having forming surfaces, thereby forming the flange and web portions. Thereafter the blank is cured. The curing can take place within a vacuum bag and by means of heat. The above-mentioned mill of is thereafter performed for providing the cavities making it possibly to mount the power plants nearer the wing chord.

US 6 355 133 discloses a method of forming a composite article that comprises a plastics materials reinforced with fibres. A forming step is carried out on the blank, whereby its planar surface is formed into a right angle, whilst still conforming to the form tool an operation carried out whilst applying increased heating to the component. The article is constrained against movement in a direction perpendicular to the plane of the main direction of layers and forces are applied to the article in the plain thereof in a direction substantially perpendicular to the main direction of the fibres. The article is thereby urged into conformity with the contoured surface of the tool while substantially maintaining the continuity of the fibres.

It also discloses an apparatus according to the preamble of claim 1.

US 6 114 012 discloses a rib having a plurality of beds for accomodating a shell structure providing an increased strength.

The object of the present invention is to overcome the drawbacks of known methods and apparatuses for manufacture of air craft wing spars, having at least a recess for accommodating support element.

### SUMMARY OF THE INVENTION

This has been solved by a method comprising the steps claimed in claim 1.

Thereby a wing spar element can be achieved adapted for partly embodying at least one power plant support having its upper part nearer the wing chord making it possibly to fasten the power plant to the underside of wing such that sufficient ground clearance is achieved, keeping the landing gear as short as possible, during taxiing and take-off, without the need of milling of composite material for providing a recess in the wing spar and without the costly manufacture step of applying reinforcement material to the wing spar within the area of the recess, which also would involve higher weight to the aircraft. Also other elements, such as weapon system supports etc., can be located within such a recess.

Suitably, the step of forming the blank also includes the forming of the blank into a second flange portion with at least one third protrusion formed to extend across the second flange portion and to protrude inward from the inner surface of the second flange portion, wherein this third protrusion merges into the first protrusion.

In such way, a C-beam like wing spar can be achieved having the recess on the underside of the wing spar. By using the advantage of forming the one flange with a first inwardly protrusion and compensating this protrusion with an outwardly protrusion of the web and a further inwardly protrusion of the other flange, wherein both inwardly protrusions merging with the outwardly protrusion, a geometry compensation is achieved and the reinforcement fibres of the plastic material follow the curvature of the protrusions and the strength properties are not effected. The inwardly protrusions' extended areas correspond with the extended area of the outwardly protrusion. A recess is achieved in the beam for accommodating the power plant support, without milling of material. An ATL-apparatas can be used in an automated production line for applying plies of prepreg material for making the blank, wherein the blank is used for the manufacture of the C-beam having a recess according to the present invention for accommodating for example a power plant support.

Preferably, the step of curing the blank includes the process of heating the blank applied onto the forming tool.

In such way the curing of the blank can be controlled.

Suitably, the curing of the blank is performed by sealing the blank in a vacuum bag; evacuating air from the vacuum bag; and heating the blank by means of a heating means.

Thereby the beam can be finished in a short time and in a labour saving manner, directly in the forming tool.

Preferably, the blank comprises plies of prepreg-material including reinforcement fibres.

In such a way a beam having high strength is achieved, still the manufacture of the beam is performed without any complex and time consuming work for creating the recess of the beam. Also will, due to the geometry compensation of the inwardly protrusions merging with the outwardly protrusion, no fibres have to be cut of, which otherwise would weaken the beam.

Suitably, the blank is produced by an ATL-apparatus before the step of applying the blank onto the forming tool.

Thereby a material saving production of the beam is achieved since the by the ATL-apparatus produced rectangular blank not has to be milled of and plies do not have to be formed individually within the area of the recess which otherwise has to be cut of regarding the projecting edges thereof.

This has also been solved by an apparatus comprising the features of claim 7.

In such way an apparatus is provided comprising a forming tool that can be used for forming of for example an L-beam or C-beam profile element having a recess for accommodating a support element, for example a power plant support, without the need of cutting the profile element for creating a recess.

Suitably, the forming tool further comprises a second flange forming surface comprising a curved inward forming surface for forming of a curved inward protrusion of a second flange portion.

Preferably, the web forming and flange forming surfaces have a curvature along the elongation of the forming tool.

In such way curved C-beams can be formed having a recess for accommodating a support element.

Suitably, the flange forming surface comprises two curved inward forming surfaces for making two recesses, each inward forming surface merging with a respective outward forming surface.

Thereby the profile element can be cost-effective manufactured, which profile element can be used for an aircraft wing spar, wherein two support elements, such as power plant supports, can be mounted near the wing chord.

### BRIEF DESCRIPTION OF THE DRAWINGS

The present invention will now be described by way of example with reference to the accompanying schematic drawings, of which:
FIG. 1a illustrates an aircraft without any recesses in its wing spar not accommodating power plant support elements;
FIG. 1b illustrates an aircraft having recesses in its wing spar for creating a further distance between the ground and the power plants;
FIG. 2a illustrates a perspective view of a C-beam comprising a recess according to a first embodiment of the present invention;
FIG. 2b illustrates a cross section of plane P in FIG. 2a;
FIG. 3 illustrates partly a cross section of a wing comprising two wing spars, each having a recess as shown in FIG. 2a;
FIG. 4a illustrates a forming tool's male forming tool part for forming of the C-beam in FIG. 2a;
FIG. 4b illustrates a cross section A-A in FIG. 4a; and
FIG. 5 illustrates an elongated wing spar L-profile element formed with a recess according to second embodiment.

### DETAILED DESCRIPTION OF THE PREFERRED EMBODIMENTS

Hereinafter, embodiments of the present invention will be described in detail with reference to the accompanying drawings, wherein for the sake of clarity and understanding of the invention some details of no importance are deleted from the drawings.

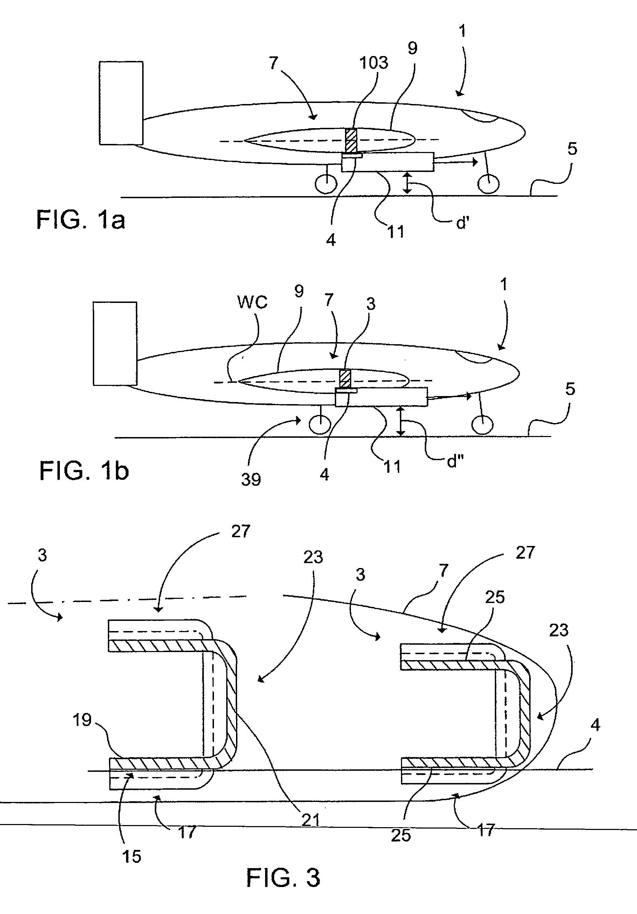

FIG. 1a illustrates an aircraft 1 without any recesses in its wing spar 103, thereby not accommodating power plant support elements 4. The aircraft 1 is located on the ground surface 5 before take-off. The aircraft's wing 7 comprises the wing spar 103 embodied within the wing shell 9. The aircraft 1 comprises two power plants 11 (only one is shown) located below the wing 7, each power plant 11 is connected to the wing 7 via the power plant support element 4. The distance between ground surface 5 and the power plant 11 is marked with d'. Furthermore, prior art wing spars (not shown) are provided with cavities or recesses, achieved by machining the wingspar (by milling of composite material of the wing spar's lower flange or web at the location of the cavities). The support element of the respective power plant is thus arranged as near as possibly to the wing chord.

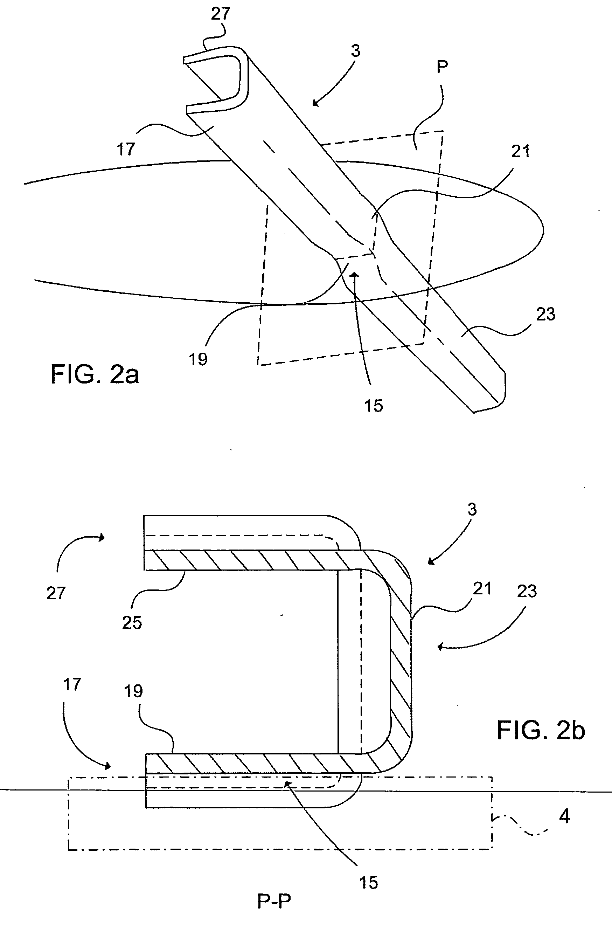

FIG. 1b illustrates a twin engine aircraft 1 having a wing spar 3 comprising two recesses 15 (see FIG. 2a) accommodating the power plant support elements 4 for creating a further distance between the ground surface 5 and the power plants 11. The distance is marked with d" and is greater than the distance d' in FIG. 1a. This distance d" is desirable for solving the problem of, keeping the landing gear 39 as short as possible, creating a sufficient ground clearance between the power plant 11 and the ground surface 5 during taxiing and take-off.

FIG. 2a illustrates a perspective view of the C-beam, or wing spar 3 shown in FIG. 1b, comprising a recess 15 for accommodating a support element 4 (see FIG. 2b) nearer the wing chord. By forming a first flange 17 with a first inwardly protrusion 19 and compensating this protrusion 19 with an outwardly protrusion 21 of the web 23 and a further inwardly protrusion 25 (see FIG. 2b) of a second flange 27, wherein both inwardly protrusions 19, 25 merging with the outwardly protrusion 21, such that a geometry compensation is achieved, the wing spar will maintain its strength (by comparison with a milled of cavity according to the prior art wing spar), due to the intact fibres of the composite. The inwardly protrusion's 19, 25 inwardly buckled areas correspond to the outwardly buckled area of the outwardly protrusion 21. No reinforcing fibres (such as carbon, glass etc) has to be cut of for achieving the recess for accommodating the power plant support 4 nearer the wing chord WC.

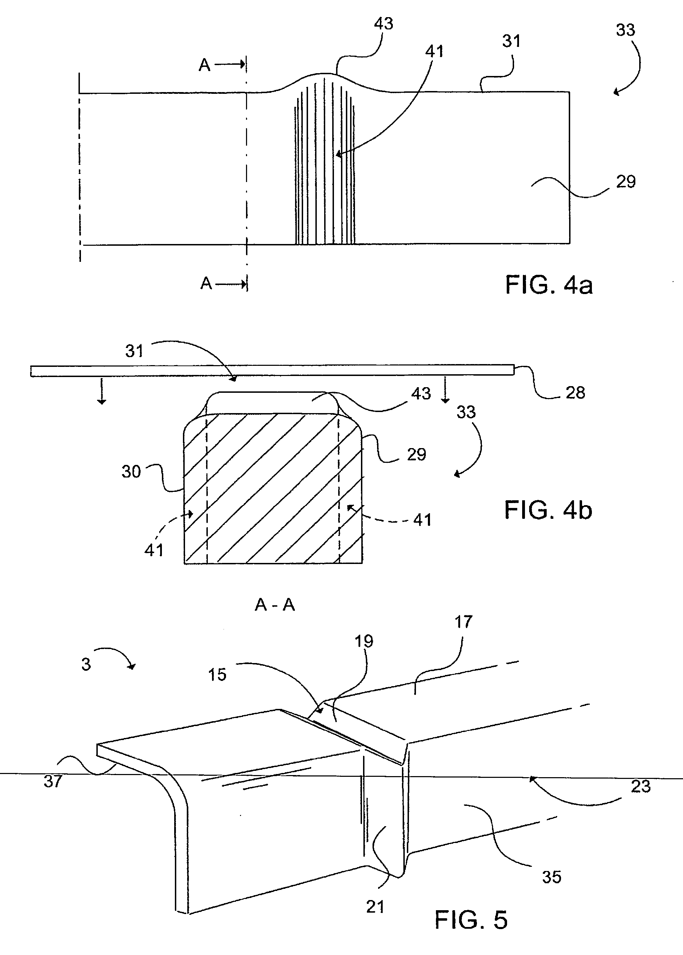

The wing spar 3 is manufactured by applying a blank 28 of resin composite material about a first flange forming surface 29 and a web forming surface 31 of a forming tool 33 (see FIG. 4a and 4b). The blank 28 is made by an ATL-apparatus (automatic tape laying machine) (not shown) in a cost effective manner. The ATL-apparatus can be reprogrammed for different types of blanks 28 earmarked for a certain wing spar. Prepreg tapes (not shown) including fibres (not shown) of carbon extending in the longitudinal direction of the pregreg tape are applied by the ATL-apparatus perpendicular and diagonally to and also along the longitudinal direction of the blank 28.

After application of the blank 28 onto the forming tool 33, the blank 28 is formed into the web portion 23 with a first ridge (outwardly protrusion 21) formed to extend across the web portion 23 and to protrude outward from the outer surface 35 (se FIG. 5) of the web portion 23. When the web portion 23 is formed, also the first flange portion 17 is formed comprising a second ridge (inwardly protrusion 19) being formed to extend across the first flange portion 17 and to protrude inward from the inner surface 37 of the first flange portion 17, wherein this second ridge merges into the first ridge and constitutes said recess 15 (indicated with reference 15 in FIG. 5) for accommodating the power plant support element 4 shown in FIG. 2b. Similarly, the second flange portion 27 (see FIG. 2b) is formed with a third ridge (inwardly protrusion 25) formed to extend across the second flange portion 27 and to protrude inward from the inner surface of the second flange portion 27, wherein this third ridge merges into the first ridge.

In such way a C-beam wing spar can be achieved comprising the recess 15 for accommodating a support element onto the underside of the wing spar 3, without affecting the weight or strength of the wing spar. By using the advantage of forming the first flange 17 with a first inwardly protrusion 19 and compensating this protrusion 19 with an outwardly protrusion 21 of the web 23 and a further inwardly protrusion 25 of the other flange 27, wherein both inwardly protrusions 19, 25 merging with the outwardly protrusion 21, a geometry compensation is achieved. The inwardly protrusions' 19, 25 extended areas correspond with the extended area of the outwardly protrusion 21. Thus, a recess is achieved in the C-beam for accommodating the power plant support, without milling of material. An ATL-apparatus can be used in an automated production line applying plies of prepreg material making the blank 28. Thus, the cost-effective made blank 28 can be used for the manufacture of the C-beam having a recess 15 according to the invention for accommodating for example a power plant support 4.

After forming the blank 28 onto the forming tool 33, curing of the formed blank 28 is performed. The curing of the blank 28 is performed by sealing the blank 28 in a vacuum bag (not shown), evacuating air from the vacuum bag and heating the blank 28 by means of a heating means (not shown). Thereby the C-beam can be finished in a short time and in a labour saving manner directly in the forming tool. The heating is controlled by a control unit (not shown) for controllable curing. When the blank 28 has been cured, it is removed from the forming tool 33.

Thereby a wing spar element 3 is achieved, adapted for partly embodying at least one power plant support 4 having the support's upper part nearer the wing chord WC (see FIG. 1b) making it possibly to providing the power plant 11 to the underside of the wing 7 such that sufficient ground clearance is achieved, keeping the landing gear 39 (see FIG. 1b) as short as possible, during taxiing and take-off, without the need of milling of composite material for providing a recess in the wing spar 3 and without the costly manufacture step of applying reinforcement material to the wing spar within the area of the recess, which also would involve higher weight to the aircraft.

FIG. 2b illustrates a cross section corresponding with plane P in FIG. 2a. The cross section is taken through the portion of the wing spar 3, wherein a part of the first flange 17 is curved inward, forming the recess 15 (first inwardly protrusion 19). Dashed and dotted line shows a support element 4 accommodated in the recess 19 partly. For keeping the fibres intact through the wing spar without cutting them of, an opposite inwardly protrusion 25 is formed in the second flange 27, which protrusion 25 together with the outwardly protrusion 21 compensate the first inwardly protrusion 19. Thus, the outwardly protrusion 21 merges with the first 19 and second 25 inwardly protrusions of the web portion, such that a geometric compensation is achieved. The strength of the wing spar is maintained since no fibres have to be cut of and the fibres follow the structure of the wing spar 3 smoothly.

FIG. 3 illustrates partly a cross section of a wing 7 comprising two wing spars 3 having recesses. Each wing spar 3 (i.e. elongated beam profile element) comprises a web portion 23 and a first flange portion 17 extending from the web portion 23. The wing spar 3 also comprises a second flange portion 27 located opposite the first flange portion 17. Each of the first flange portions 17 comprises the recess 15 (first inwardly protrusion 19) provided for accommodating a support element, such as a power plant support 4.

FIG. 4a illustrates a forming tool's male forming tool 33 (only partly illustrated) of an apparatus for forming of the C-beam in FIG. 2a. The blank (not shown) is to be placed onto the male forming part tool 33. The blank comprises plies of prepreg-material including fibres having reinforcement fibres.

The apparatus comprises the web forming surface 31 and the first 29 and second (not shown) flange forming surface provided on the male forming tool 33 for forming the blank into the elongated wing spar profile element 3. The male forming tool's 33 first flange forming surface 29 is provided with a curved inward forming surface 41 for forming of the curved inward ridge making the recess 15 (first inwardly protrusion 19) of the first flange portion 17 (see FIG. 2b). The web forming surface 31 is provided with a curved outward forming surface 43 for forming of the curved outward ridge (protrusion 21) of the web portion 23 (see FIG. 2b). The curved inward forming surfaces 41 and the curved outward forming surface 43 of the forming tool 33 merge with each other. The magnitude of the curved inward forming surface's 41 area corresponds with the magnitude of the curved outward forming surface's 43 area, such that a geometric compensation is achieved for the blank 28, wherein the blank 28 will not wrinkle. With other words, the area of the inward protrusion surface must be the same as the area of the outward protrusion. Of course, this relation can be varied since curved elongated wing spars, due to the curvature, require a sometimes not equal relationship.

FIG. 4b illustrates a cross section A-A in FIG. 4a. The forming tool's 33 curved outward forming surface 43 (only half of which is shown) merges into the inward forming surfaces 41 of the first and second flange forming portions 29, 30.

The apparatus in FIG. 4a-4b can be used for forming of an L-shaped wing spar (see FIG. 5) as well, having a recess for accommodating a support element. However with different curvature for the recess 15 (inwardly protrusion 19) and for the compensating outwardly protrusion 21, each of which having a sharp bent.

The L-shaped wing spar shown in FIG. 5 comprises a first elongated flange portion 17 and a web portion 23 joining each other. The first ridge (outwardly protrusion 21) formed to extend across the web portion 23 and to protrude outward from the outer surface 35 of the web portion 23. At the same time as the blank is formed into the first flange portion 17, a second ridge (inwardly protrusion 19) being formed to extend across the first flange portion 17 and to protrude inward from the inner surface 37 of the first flange portion 17, wherein this second ridge merges into the first ridge and constitutes said recess 15 for accommodating the support element under the wing.

The present invention is of course not in any way restricted to the preferred embodiments described above, but many possibilities to modifications or combinations of the described embodiments thereof should be apparent to a person with ordinary skill in the art without departing from the basic idea of the invention as defined in the appended claims. The profile element's web portion can be formed with an inward protrusion and the flanges with outward protrusions. The outward protrusions compensating the inward protrusion, so that no material has to be cut of. The inward protrusion of the web portion is directed towards the wing's underside.

The magnitude (or extension) of the curved inward forming surface's area corresponds with the magnitude (extension) of the curved outward forming surface's area, such that a geometric compensation is achieved. With other words, the area of the protrusion surface inward must be the same as the area of the protrusion outward. Of course, this relation can be varied, since curved elongated wing spars, due to the curvature, sometimes require a not equal relationship between said areas.

Also other elements, such as weapon system supports etc., can be located within the recess. The forming tool can be slightly bent for forming a profile element having a curvature. The composite plastic can be thermo setting plastic, epoxi resins, thermoplastics, polyester resins, fibreglass reinforced plastics etc. The forming and curing process of the blank can also use a female forming tool co-operating with the male forming tool. The heating means can be in the form of electrical heater element, water radiators, heating resistor elements, heated air etc.

## Claims

1. A method for manufacture of an aircraft wing spar (3), comprising a web portion (23) and a first flange portion (17) extending from the web portion (23), the first flange portion (17) comprises a recess (15) provided for accommodating a a power plant support, the method being performed by applying a blank (28) of resin composite material about a first flange, forming surface (29) and a web forming surface (31) of a forming tool (33), the method **comprises the additional steps of:**
- forming the blank (28) into the web portion (23) with at least one first protrusion (21) formed to extend across the web portion (23) and to protrude outward from the web portion's (23) outer surface (35); and into the first flange portion (17) with at least one second protrusion (19) formed to extend across the first flange portion (17) and to protrude inward from the first flange portion's (17) inner surface (37), wherein this second protrusion (19) merges into the first protrusion (21) and constitutes said recess (15);
- curing the formed blank (28); and
- removing the cured elongated beam profile element (3) from the forming tool (33).

2. The method according to claim 1, **wherein** the step of forming the blank (28) also includes the forming the blank (28) into a second flange portion (27) with at least one third protrusion (25) formed to extend across the second flange portion (27) and to protrude inward from the second flange portion's (27) inner surface (37), wherein this third protrusion (25) merges into the first protrusion (21).

3. The method according to claim 1 or 2, **wherein** the step of curing the blank (28) includes the process of heating the blank (28) applied onto the forming tool (33).

4. The method according to any of claim 1 to 3, **wherein** the curing of the blank (28) is performed by:
- sealing the blank (28) in a vacuum bag;
- evacuating air from the vacuum bag; and
- heating the blank (28) by means of a heating means.

5. The method according to any of the preceding claims, **wherein** the blank (28) comprises plies of prepreg-material including reinforcement fibres.

6. The method according to any of the preceding claims, **wherein** the blank (28) is produced by an automatic tape laying apparatus before the step of applying the blank (28) onto the forming tool (33).

7. An aircraft wing spar manufacture apparatus for manufacture of an aircraft wing spar (3), comprising a web portion (23) and a first flange portion (17), which extends from the web portion (23), and a recess (15) provided for accommodating a power plant support, the apparatus comprises a web forming surface (31) and a first flange forming surface (29) of a forming tool (33) for forming a blank (28) into the elongated beam profile element (3), **characterised by** that
- the first flange forming surface (29) is provided with a curved inward forming surface (41) for forming of a curved inward protrusion (19) constituting the recess (15) of the first flange portion (17),
- the web forming surface (31) is provided with a curved outward forming surface (43) for forming of a curved outward protrusion (21) of the web portion (23),
- the curved inward forming surface (41) and the curved outward forming surface (43) merge with each other, and
- the magnitude of the curved inward forming surface's (41) area corresponds with the magnitude of the curved outward forming surface's (43) area.

8. The apparatus according to claim 7, **wherein** the forming tool (33) further comprises a second flange forming surface (30) comprising a curved inward forming surface for forming of a second curved inward protrusion (25) of a second flange portion (27).

9. The apparatus according to claim 7 or 8, **wherein** the web forming (31) and flange forming surface (29, 30) have a curvature along the elongation of the forming tool (33).

10. The apparatus according to any of claims 7-9, **wherein** the flange forming surface (29, 30) comprises two curved inward forming surfaces (41) for making two recesses (15), each inward forming surface (41) merging with a respective outward forming surface (43).

## Patentansprüche

1. Verfahren zum Herstellen eines Flugzeugflügelholms (3) mit einem Bahnabschnitt (23) und einem sich vom Bahnabschnitt (23) erstreckenden ersten Flanschabschnitt (17), wobei der erste Flanschabschnitt (17) eine Aussparung (15) aufweist, die zum Aufnehmen eines Antriebsaggregatsträgers vorgesehen ist, wobei das Verfahren durch Aufbringen eines Rohlings (28) aus Harzverbundmaterial um eine erste Flanschausbildungsfläche (29) und eine Bahnausbildungsfläche (31) eines Ausbildungswerkzeuges (33) ausgeführt wird, wobei das Verfahren die zusätzlichen Schritte aufweist:
Ausbilden des Rohlings (28) in den Bahnabschnitt (23), bei dem zumindest ein erster Vorsprung (21) so ausgebildet ist, dass er sich über den Bahnabschnitt (23) erstreckt und von der Außenfläche (35) des Bahnabschnitts (23) auswärts hervorsteht, und in den ersten Flanschabschnitt (17), bei dem zumindest ein zweiter Vorsprung (19) so ausgebildet ist, dass er sich über den ersten Flanschabschnitt (17) erstreckt und von der Innenfläche (37) des ersten Flanschabschnitts (17) inwärts hervorsteht, wobei dieser zweite Vorsprung (19) in den ersten Vorsprung (21) übergeht und die Aussparung (15) bildet,
Aushärten des ausgebildeten Rohlings (28), und
Entfernen des ausgehärteten, länglichen Balkenprofilelements (3) vom Ausbildungswerkzeug (33).

2. Verfahren gemäß Anspruch 1, bei dem der Schritt des Ausbildens des Rohlings (28) ebenso aufweist: Ausbilden des Rohlings (28) in einen zweiten Flanschabschnitt (27), bei dem zumindest ein dritter Vorsprung (25) so ausgebildet ist, dass er sich über den zweiten Flanschabschnitt (27) erstreckt und von der Innenfläche (37) des zweiten Flanschabschnitts (27) inwärts hervorsteht, wobei dieser dritte Vorsprung (25) in den ersten Vorsprung (21) übergeht.

3. Verfahren gemäß Anspruch 1 oder 2, bei dem der Schritt des Aushärtens des Rohlings (28) den Arbeitsgang des Erwärmens des auf dem Ausbildungswerkzeug (33) aufgebrachten Rohlings (28) aufweist.

4. Verfahren gemäß einem der Ansprüche 1 bis 3, bei dem das Aushärten des Rohlings (28) durchgeführt wird durch:
Abdichten des Rohlings (28) in einem Vakuumsack,
Evakuieren von Luft aus dem Vakuumsack, und
Erwärmen des Rohlings (28) mittels eines Erwärmungsmittels.

5. Verfahren gemäß einem der vorangegangenen Ansprüche, bei dem der Rohling (28) Gewebe aus Prepreg-Material mit Verstärkungsfasern aufweist.

6. Verfahren gemäß einem der vorangegangenen Ansprüche, bei dem der Rohling (28) durch eine automatische Bandlegeeinrichtung vor dem Schritt des Aufbringens des Rohlings (28) auf dem Ausbildungswerkzeug (33) gefertigt wird.

7. Flugzeugflügelholm-Herstellungseinrichtung zum Herstellen eines Flugzeugflügelholm (3) mit einem Bahnabschnitt (23) und einem sich vom Bahnabschnitt (23) erstreckenden ersten Flanschabschnitt (17), und mit einer Aussparung (15), die zum Aufnehmen eines Antriebsaggregatsträgers vorgesehen ist, wobei die Einrichtung eine Bahnausbildungsfläche (31) und eine erste Flanschausbildungsfläche (29) eines Ausbildungswerkzeuges (33) zum Ausbildens eines Rohlings (28) in das längliche Balkenprofilelement (3) aufweist, **gekennzeichnet dadurch, dass**
die erste Flanschausbildungsfläche (29) mit einer gekrümmten Inwärtsausbildungsfläche (41) zum Ausbilden eines gekrümmten Inwärtsvorsprungs (19) versehen ist, der die Aussparung (15) des ersten Flanschabschnitts (17) bildet,
die Bahnausbildungsfläche (31) mit einer gekrümmten Auswärtsausbildungsfläche (43) zum Ausbilden eines gekrümmten Auswärtsvorsprungs (21) des Bahnabschnitts (23) versehen ist,
die gekrümmte Inwärtsausbildungsfläche (41) und die gekrümmte Auswärtsausbildungsfläche (43) ineinander übergehen, und
die Größe des Gebiets der gekrümmten Inwärtsausbildungsfläche (41) der Größe des Gebiets der gekrümmten Auswärtsausbildungsfläche (43) entspricht.

8. Einrichtung gemäß Anspruch 7, bei der das Ausbildungswerkzeug (33) ferner eine zweite Flanschausbildungsfläche (30) aufweist, die eine gekrümmte Inwärtsausbildungsfläche zum Ausbilden eines zweiten gekrümmten Inwärtsvorsprungs (25) eines zweiten Flanschabschnitts (27) aufweist.

9. Einrichtung gemäß Anspruch 7 oder 8, bei der die Bahnausbildungs- (31) und die Flanschausbildungsfläche (29, 30) eine Krümmung entlang der Länge des Ausbildungswerkzeugs (33) haben.

10. Einrichtung gemäß einem der Ansprüche 7-9, bei der die Flanschausbildungsfläche (29, 30) zwei gekrümmte Inwärtsausbildungsflächen (41) zum Fertigen von zwei Aussparungen (15) aufweist, wobei jede Inwärtsausbildungsfläche (41) in eine entsprechende Auswärtsausbildungsfläche (43) übergeht.

## Revendications

1. Méthode de fabrication d'un longeron d'aile d'avion (3), comprenant une partie d'âme (23) et une première partie de semelle (17) s'étendant depuis la partie d'âme (23), la première partie de semelle (17) comprenant un évidement (15) destiné à loger un support de groupe motopropulseur, la méthode étant réalisée en appliquant une ébauche (28) en résine composite sur une première surface de formage de semelle (29) et une surface de formage d'âme (31) d'un outil à former (33), la méthode comprenant les étapes supplémentaires consistant à _{:}
✔ former l'ébauche (28) dans la partie d'âme (23) avec au moins une première saillie (21) formée de sorte à s'étendre à travers la partie d'âme (23) et à faire saillie vers l'extérieur à partir de la surface extérieure (35) de la partie d'âme (23) ; et dans la première partie de semelle (17) avec au moins une seconde saillie (19) formée de sorte à s'étendre à travers la première partie de semelle (17) et à faire saillie vers l'intérieur à partir de la surface interne (37) de la première partie de semelle (17), dans laquelle cette seconde saillie (19) s'insère dans la première saillie (21) et constitue ledit évidement (15) ;
✔ durcir l'ébauche formée (28) ; et
✔ retirer l'élément profilé en poutre allongée durci (3) de l'outil à former (33).

2. Méthode selon la revendication 1, dans laquelle l'étape de formage de l'ébauche (28) consiste également à former l'ébauche (28) dans une seconde partie de semelle (27) avec au moins une troisième saillie (25) formée de sorte à s'étendre à travers la seconde partie de semelle (27) et à faire saillie vers l'intérieur à partir de la surface interne (37) de la seconde partie de semelle (27), dans laquelle cette troisième saillie (25) s'insère dans la première saillie (21).

3. Méthode selon la revendication 1 ou 2, dans laquelle l'étape de durcissement de l'ébauche (28) comprend l'opération de chauffage de l'ébauche (28) appliquée sur l'outil à former (33).

4. Méthode selon l'une quelconque des revendications 1 à 3, dans laquelle le durcissement de l'ébauche est opéré en :
renfermant hermétiquement l'ébauche (28) dans une poche à vide ;
✔ évacuant l'air de la poche à vide ; et
✔ chauffant l'ébauche (28) à l'aide de moyens de chauffage.

5. Méthode selon l'une quelconque des revendications précédentes, dans laquelle l'ébauche (28) comprend des plis de matière pré-imprégnée incluant des fibres de renforcement.

6. Méthode selon l'une quelconque des revendications précédentes, dans laquelle l'ébauche (28) est produite à l'aide d'un appareil de distribution de bande automatique avant l'étape d'application de l'ébauche (28) sur l'outil à former (33).

7. Appareil de fabrication de longeron d'aile d'avion destiné à fabriquer un longeron d'aile d'avion (3), comprenant une partie d'âme (23) et une première partie de semelle (17), qui s'étend depuis la partie d'âme (23), et un évidement (15) destiné à loger un support de groupe motopropulseur, l'appareil comprenant une surface de formage d'âme (31) et une première surface de formage de semelle (29) d'un outil à former (33) pour former une ébauche (28) en l'élément profilé en poutre allongée (3), **caractérisé en ce que**
✔ la première surface de formage de semelle (29) est dotée d'une surface de formage vers l'intérieur incurvée (41) pour former une saillie vers l'intérieur incurvée (19) constituant l'évidement (15) de la première partie de semelle (17),
✔ la surface de formage d'âme (31) est datée d'une surface de formage vers l'extérieur incurvée (43) pour former une saillie vers l'extérieur incurvée (21) de la partie d'âme (23),
✔ la surface formage vers l'intérieur incurvée (41) et la surface de formage vers l'extérieur incurvée (43) fusionnent l'une avec l'autre, et
✔ la grandeur de l'aire de la surface de formage vers l'intérieur incurvée (41) correspond à la grandeur de l'aire de la surface de formage vers l'extérieur incurvée (43).

8. Appareil selon la revendication 7, dans lequel l'outil à former (33) comprend en outre une seconde surface de formage de semelle (30) comprenant une surface de formage vers l'intérieur incurvée pour former une seconde saillie vers l'intérieur incurvée (25) d'une seconde partie de semelle (27).

9. Appareil selon la revendication 7 ou 8, dans lequel les surfaces de formage d'âme (31) et de formage de semelle (29, 30) présentent une courbure le long de l'allongement de l'outil à former (33).

10. Appareil selon l'une quelconque des revendications 7 à 9, dans lequel la surface de formage de semelle (29, 30) comprend deux surfaces de formage vers l'intérieur incurvées (41) pour fabriquer deux évidements (15), chaque surface de formage vers l'intérieur (41) se fusionnant avec une surface de formage vers l'extérieur (43) respective.
